# EUROPÄISCHE PATENTSCHRIFT

(11) **EP 0 733 602 B1**
(45) Veröffentlichungstag und Bekanntmachung des Hinweises auf die Patenterteilung: **11.08.1999**
(21) Anmeldenummer: 96104098.7
(22) Anmeldetag: 15.03.1996
(51) Int. Cl.: C04B 2/06

(54) **Verfahren zur Herstellung von Kalkmilch**
Process for making milk of lime
Procédé de fabrication de lait de chaux

(30) Priorität: 21.03.1995 DE 19510122
(43) Veröffentlichungstag der Anmeldung: 25.09.1996
(73) Patentinhaber: Rheinische Kalksteinwerke GmbH & Co. KG, 42489 Wülfrath (DE); DEUTSCHE BABCOCK ANLAGEN GMBH, 46049 Oberhausen (DE); Stadt Hagen, 58095 Hagen (DE)
(72) Erfinder: Webeling, Michael, 42489 Wülfrath (DE); Glinka, Ulric, Prof. Dr.-Ing., 55597 Wöllstein (DE); Labuschewski, Jürgen, Dipl.-Ing., 58638 Iserlohn (DE); Hess, Walter, Dr.rer.pol., 40723 Hilden (DE)

(56) Entgegenhaltungen:
- EP-A- 0 177 769
- EP-A- 0 496 432
- WO-A-92/09528
- WO-A-93/19141
- DE-A- 3 826 971
- DE-A- 3 939 214
- CHEMICAL ABSTRACTS, vol. 116, no. 22, 1.Juni 1992 Columbus, Ohio, US; abstract no. 217467, XP002005989 & CN-A-1 056 474 (QILU ETHYLENE INORGANIC-CHEMICAL FACTORY)

## Beschreibung

Die Erfindung betrifft ein Verfahren zur Herstellung von Kalkmilch.

Kalkmilch wird üblicherweise durch Löschen von Branntkalk mit hohem Wasserüberschuß hergestellt. Mit Branntkalk werden sowohl gebrannte Kalke (Kalziumoxid, CaO) wie auch Dolomitkalke (Kalzium-/Magnesiumoxid, CaO/MgO) bezeichnet.

Durch spezielle Anwendungen kann auch zu Pulver gelöschter Kalk beziehungsweise Dolomitkalk als trockenes Kalkhydrat (Kalziumhydroxid, Ca(OH)₂) beziehungsweise Dolomitkalkhydrat (Kalzium-/Magnesiumhydroxid, Mg(OH)₂/Ca(OH)₂) in Wasser suspendiert werden. Die nach den üblichen Löschverfahren hergestellten Kalkhydrate, die auch als Normalhydrate bezeichnet werden, weisen eine charakteristische spezifische Oberfläche von 15 bis 22 m²/g auf.

Kalkmilch wird unter anderem zur Reinigung von Gasen und Abgasen eingesetzt, zum Beispiel nach dem Prinzip der Sprühsorption durch Eindüsen der Kalkmilch in den Rauchgasstrom und anschließende Abscheidung des trockenen Rückstandes an geeigneten Filtern.

Für bestimmte Anwendungsfälle, zum Beispiel für die Reinigung von Gasen und Abgasen nach dem Prinzip der Sprühsorption, hat Kalkmilch auf der Basis von Hydraten mit spezifischer Oberfläche größer als 22 m²/g erhebliche Vorteile. Derartige Hydrate mit vergrößerter spezifischer Oberfläche können zum Beispiel nach den aus DE 34 33 228 oder WO 92/09528 bekannten Verfahren hergestellt sein. Als organische Lösungsmittel können zum Beispiel Alkohole wie Methanol, Ethanol, Propanol, Butanol, sowie Ketone, Äther und Aldehyde eingesetzt werden. Als organische Additive können Amine und Glykole eingesetzt werden, zum Beispiel Ethylenglykol, Diethylenglykol, Triethylenglykol, Monoethanolamin, Diethenolamin, Triethanolamin und ihre Mischungen. Die charakteristische spezifische Oberfläche beträgt > 30 m²/g.

Im Vergleich zu normaler aus Branntkalk hergestellter Kalkmilch wird bei durch Suspendieren von Kalkhydrat großer Oberfläche in Wasser hergestellter Kalkmilch der Kalkverbrauch in der Sprühsorption zum Beispiel einer Müllverbrennungsanlage bei gleicher Reinigungswirkung um 40% verringert. Außerdem entstehen 30% weniger Rauchgasreinigungsrückstände. Der Einsatz von normaler Kalkmilch ist in den üblichen Rauchgasreinigungssystemen aus Gründen der benötigten stöchiometrischen Verhältnisse mit erheblichen Schwierigkeiten verbunden. Durch Einsatz von Kalkmilch aus Hydrat großer Oberfläche lassen sich die Umweltvorschriften für die Abgasreinigung bei normaler Rohgaszusammensetzung problemlos einhalten.

Als nachteilig hat sich herausgestellt, daß beim Suspendieren dieser Kalkhydrate, die unter Zusatz von organischen Lösungsmitteln und/oder organischen Additiven gelöscht wurden, ein stabiler Schaum entsteht, der anlagentechnisch zu Problemen führt.

Der Erfindung liegt daher die Aufgabe zugrunde, ein Verfahren zur Herstellung von Kalkmilch anzugeben, bei dem unter Verwendung von organischen Lösungsmitteln und/oder organischen Additiven hergestellte Kalkhydrate mit großer spezifischer Oberfläche eingesetzt werden können, ohne daß eine Schaumbildung auftritt.

Die Aufgabe wird dadurch gelöst, daß daß die Kalkmilch hergestellt wird durch Suspendieren von unter Verwendung von organischen Lösungsmitteln und/oder organischen Additiven hergestelltem Kalkhydrat und/oder Dolomitkalkhydrat mit einer gegenüber Normalhydrat vergrößerten spezifischen Oberfläche in Wasser unter Anwesenheit von feinpulvrigen Aktivkoksen.

"Aktivkoks" wird als Bezeichnung verwendet für alle Produkte, die durch eine Verschwelung von Kohlen oder Torf gewonnen werden und eine große innere Oberfläche aufweisen. Das aus der nachfolgenden Aktivierung, zum Beispiel durch Wasserdampf, gewonnene Produkt wird allgemein als Aktivkohle bezeichnet. Das im Herdofenprozeß aus Braunkohle gewonnene Produkt wird als Braunkohlenherdofenkoks bezeichnet.

Bevorzugt wird ein Zusatz von Aktivkoksen in Massenanteilen von 0,2 bis 3% bezogen auf das trockene Kalkhydrat.

Das erfindungsgemäße Verfahren kann dahingehend ausgestaltet sein, daß Kalk- beziehungsweise Dolomitkalkhydrat vor dem Suspendieren in Wasser mit den Aktivkoksen vermischt wird oder daß die Aktivkokse vor oder während der Zugabe des Kalk- beziehungsweise Dolomitkalkhydrates mit dem Wasser vermischt werden.

Eine weitere Ausgestaltung kann darin bestehen, daß die Aktivkokse bei der Herstellung von Kalkhydrat und/oder Dolomitkalkhydrat zum Branntkalk oder zum Löschwasser zugemischt werden.

Die Erfindung wird an zwei Beispielen erläutert:

### Beispiel 1

Beim intensiven Dispergieren von Kalkhydrat, hergestellt nach Patent DE 34 33 228, zu einer 15%igen Suspension ergibt sich ein Schaumvolumen von
250 ml Schaum/kg Kalkmilch. Beim Vermischen von Kalkhydrat mit 1% Aktivkohlestaub und anschließendem Dispergieren in Wasser zu einer 15%igen Suspension wird Schaumbildung vollständig verhindert.

### Beispiel 2

Beim Dispergieren von Kalkhydrat, hergestellt nach Patent DE 34 33 228, zu einer 20%igen Suspension ergibt sich ein Schaumvolumen von 260 ml Schaum/kg Kalkmilch. Gibt man dem Wasser vorher 2% feinteiligen Herdofenkoks zu, so reduziert sich das Schaumvolumen auf
20 ml Schaum/kg Kalkmilch.

## Patentansprüche

1. Verfahren zur Herstellung von Kalkmilch, dadurch gekennzeichnet, daß die Kalkmilch hergestellt wird durch Suspendieren von Kalkhydraten und/oder Dolomitkalkhydraten, die unter Zusatz von organischen Lösungsmitteln und/oder organischen Additiven gelöscht wurden und eine gegenüber Normalhydrat vergrößerte spezifische Oberfläche aufweisen, in Wasser unter Anwesenheit von feinpulvrigen Aktivkoksen.

2. Verfahren nach Anspruch 1, dadurch gekennzeichnet, daß die Aktivkokse in Massenanteilen von 0,2 bis 3% bezogen auf das trockene Kalkhydrat zugesetzt werden.

3. Verfahren nach Anspruch 1 oder 2, dadurch gekennzeichnet, daß Kalkhydrat und/oder Dolomitkalkhydrat vor dem Suspendieren in Wasser mit den Aktivkoksen vermischt wird.

4. Verfahren nach Anspruch 1 oder 2, dadurch gekennzeichnet, daß die Aktivkokse vor oder während der Zugabe des Kalkhydrates und/oder Dolomitkalkhydrates mit dem Wasser vermischt wird.

5. Verfahren nach Anspruch 1 oder 2, dadurch gekennzeichnet, daß die Aktivkokse bei der Herstellung von Kalkhydrat und/oder Dolomitkalkhydrat zugemischt werden.

## Claims

1. Process for the manufacture of milk of lime, characterised in that the milk of lime is manufactured by suspending in water, in the presence of finely powdered activated cokes, lime hydrates and/or dolomitic lime hydrates which have been slaked with the addition of organic solvents and/or organic additives and have a greater specific surface area than normal hydrate.

2. Process according to Claim 1, characterized in that the activated cokes are added in proportions of 0.2 to 3% by weight, based on the dry lime hydrate.

3. Process according to Claim 1 or 2, characterized in that lime hydrate and/or dolomitic lime hydrate is mixed with the activated cokes prior to suspension in water.

4. Process according to Claim 1 or 2, characterized in that the activated cokes are mixed with the water before or during the addition of the lime hydrate and/or dolomitic lime hydrate.

5. Process according to Claim 1 or 2, characterized in that the activated cokes are admixed when the lime hydrate and/or dolomitic lime hydrate are being manufactured.

## Revendications

1. Procédé de fabrication de lait de chaux,
caractérisé en ce que
le lait de chaux est produit par suspension d'hydrates de chaux et/ou d'hydrates de chaux dolomitiques qui sont été dissous par addition de solvants organiques et/ou additifs organiques et comportent une surface spécifique grossie par rapport à un hydrate normal, dans de l'eau en présence de cokes actifs en poudre fine.

2. Procédé selon la revendication 1,
caractérisé en ce que
les cokes actifs sont ajoutés en proportions massiques de 0,2 à 3 % par rapport à l'hydrate de chaux séché.

3. Procédé selon les revendications 1 ou 2,
caractérisé en ce que
l'hydrate de chaux et/ou l'hydrate de chaux dolomitique est mélangé avant la suspension dans de l'eau avec les cokes actifs.

4. Procédé selon les revendications 1 ou 2,
caractérisé en ce que
les cokes actifs sont mélangés avant ou pendant l'addition de l'hydrate de chaux et/ou de l'hydrate de chaux dolomitique avec l'eau.

5. Procédé selon les revendications 1 ou 2,
caractérisé en ce que
les cokes actifs sont mélangés lors de la fabrication d'hydrate de chaux et/ou d'hydrate de chaux dolomitique.
